# EUROPEAN PATENT APPLICATION

(11) **EP 3 480 261 A1**
(43) Date of publication of application: **08.05.2019**
(21) Application number: 17199855.2
(22) Date of filing: 03.11.2017
(51) Int. Cl.: C09D 5/02, C09D 167/02, C08G 63/668

(54) **AQUEOUS COATING COMPOSITIONS AND PROCESSES OF FORMING MULTI-COMPONENT COMPOSITE COATINGS ON SUBSTRATES**

(71) Applicant: PPG Industries Ohio, Inc., Cleveland, OH 44111 (US)
(72) Inventor: ZACHERT, Daniel, 71642 Ludwigsburg (DE); KELLER, Gerd Tobias, 71642 Ludwigsburg (DE); KLÄGER, Wolfgang, 71229 Leonberg (DE)
(74) Representative: f & e patent

(57) **Abstract**

The present invention relates to an aqueous coating composition comprising:
(a) a film-forming resin selected from polyesters made from monomers comprising a polyetherpolyol and a polycarboxylic acid, the polyester bearing functional groups and having a Tg of less than -10°C measured according to ASTM D3418-15 (midpoint temperature, at a heating rate of 20°C/min);
(b) a rheology modifier selected from inorganic and resinous rheology modifiers and combinations thereof;
(c) one or more color-imparting pigments or effect pigments or combinations thereof; and
(d) one or more cross-linking agents that are reactive with the functional groups of the film-forming resin according to a),
wherein the coating composition exhibits a low shear viscosity of 0.5 to 40 Pas at 0.1 s⁻¹ at 25°C measured according to ASTM 22196-15 Method B Spindle No **X,** a method for making said coating composition, a method for coating an automotive substrate utilizing said coating composition and a coated substrate comprising a base coat layer deposited from said coating composition.

## Description

### FIELD OF THE INVENTION

The present invention relates to waterborne curable film-forming compositions, multilayer coated substrates prepared therewith, and methods of forming a composite coating on a substrate.

### BACKGROUND OF THE INVENTION

In industrial coating processes such as those used in automotive manufacturing, efforts are constantly made to reduce energy consumption and costs, as well as atmospheric pollution caused by volatile solvents which are emitted during a painting process. However, it is often difficult to achieve high quality, smooth coating finishes with adequate physical properties without applying multiple coating layers, each having their own cure regimen. In addition to achieving near-flawless appearance, automotive coatings must be durable and chip resistant, historically made possible by using multiple coating layers, each serving its own purpose.

The current state of the art automobile painting process involves electrophoretic application of a paint layer to the bare or treated metal substrate followed by fully curing the so-applied layer. A filler layer, whose purpose is primarily to provide chip resistance, UV opacity, and substrate filling (to smooth surface defects) is then applied, followed again by a full curing cycle. A colored basecoat layer is then applied, generally followed by a heated flash and then application of a final clearcoat layer. These two layers are then co-cured to produce the final coated article. There has been a tendency in the last decade to reduce the paint booth footprint, reduce the number of intermediate bake cycles and hence energy expenditure, reduce the number of coating layers and therefore system complexity, while maintaining the high level of optical quality and appearance of the resulting coated vehicles. The general name given to such modified paint processes is Compact Process.

In order to reduce layers, it is usually the primer layer and its associated oven that is eliminated, and the basecoat composition is then typically designed to incorporate some of the filler properties such as chip resistance and substrate filling. In this case the basecoat is typically applied in two layers with the composition of the first layer being modified to incorporate some heretofore filler-associated properties. After application of the two basecoat layers, a heated flash may be employed to remove some of the solvent and is followed by clearcoat application. The multi-component composite coating composition, or "coating stack", is then co-cured to provide the final article. In order to provide desired basecoat opacity and protection of the electrocoat layer, the sum of basecoat layer thicknesses is generally greater than the thickness of a basecoat applied over a fully baked conventional primer.

A similar possibility is known as a 3C1B (3 coat - 1 bake) process and involves keeping the filler layer *per se,* but removing the complete bake after the primer layer. The three layers (primer / basecoat / clearcoat) are applied wet-on-wet-on-wet, with or without heated intermediate flashes between layers, and co-cured in a single cure oven to produce the final article. This process maintains the functionality of the primer layer but removes the cost associated with the primer oven.

Thus, there is still a desire in the industry to further reduce the number of coating layers or coating layer application steps as well as the energy consumption associated with flashing at elevated temperature and curing of the composite coating layer system without compromising required properties of the coating system particularly chip resistance and appearance of the coating system.

Therefore, it is an object of the present invention to provide an aqueous coating composition that can be applied directly onto a cured electrodeposition coating layer of an electro-coated substrate in sufficient coating layer thickness in a single application step providing the desired color and/or effect properties so that a filler layer or a second base coat layer can be omitted without compromising the required properties of the multilayer composite coating such as chip resistance.

### SUMMARY OF THE INVENTION

The present invention is directed to an aqueous coating composition comprising:
(a) a film-forming resin selected from polyesters made from monomers comprising a polyetherpolyol and a polycarboxylic acid, the polyester bearing functional groups and having a Tg of less than -10°C measured according to ASTM D3418-15 (midpoint temperature, at a heating rate of 20°C/min);
(b) a rheology modifier selected from inorganic and resinous rheology modifiers and combinations thereof;
(c) one or more color-imparting pigments or effect pigments or combinations thereof; and
(d) one or more cross-linking agents that are reactive with the functional groups of the film-forming resin according to a),
wherein the coating composition exhibits a low shear viscosity of 0.5 to 40 Pas at 0.1 s⁻¹ at 25°C measured according to ASTM 22196-15 Method B Spindle No LV-1.

The present invention is further directed to a method for coating an automotive substrate comprising:
(A) depositing the coating composition according to the present invention onto the cured electrodeposition coating layer of an electro-coated substrate;
(B) optionally flashing the coating layer obtained in step (A);
(C) depositing a clear coating composition onto the coating layer obtained in step (A) or step (B) if step (B) is performed;
(D) simultaneous curing of the coating layers applied in step (A) and (C).

The present invention is further directed to a composite multilayer coating comprising
(i) an electrocoating layer deposited from an electrophoretically applied coating composition;
(ii) a base coating layer deposited from the coating composition of the present invention directly onto the electrocoating layer; and
(iii) a clear coating layer deposited directly onto the base coating layer.

The present invention is further directed to a coated substrates comprising a cured coating layer deposited from the coating composition according to the present invention or the composite multilayer coating according to the present invention or is obtainable by the process according to the present invention.

### DETAILED DESCRIPTION OF THE INVENTION

Other than in the operating examples, or unless otherwise expressly specified, all of the numerical ranges, amounts, values and percentages such as those for amounts of materials, times and temperatures of reaction, ratios of amounts, values for molecular weight (whether number average molecular weight ("Mₙ") or weight average molecular weight ("M_{w}")), and others in the following portion of the specification may be read as if prefaced by the word "about" even though the term "about" may not expressly appear with the value, amount or range. Accordingly, unless indicated to the contrary, the numerical parameters set forth in the following specification and attached claims are approximations that may vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques.

Notwithstanding that the numerical ranges and parameters setting forth the broad scope of the invention are approximations, the numerical values set forth in the specific examples are reported as precisely as possible. Any numerical value, however, inherently contain certain errors necessarily resulting from the standard deviation found in their respective testing measurements. Furthermore, when numerical ranges of varying scope are set forth herein, it is contemplated that any combination of these values inclusive of the recited values may be used.

Plural referents as used herein encompass singular and vice versa. For example, while the invention has been described in terms of "a" cationic acrylic resin derived from an epoxy functional acrylic resin, a plurality, including a mixture of such resins can be used.

Any numeric references to amounts, unless otherwise specified, are "by weight".

As used herein, the terms "thermosetting" and "curable" can be used interchangeably and refer to resins that "set" irreversibly upon curing or crosslinking, wherein the polymer chains of the polymeric components are joined together by covalent bonds. This property is usually associated with a crosslinking reaction of the composition constituents often induced, for example, by heat or radiation. See Hawley, Gessner G., The Condensed Chemical Dictionary, Ninth Edition., page 856; Surface Coatings, vol. 2, Oil and Colour Chemists' Association, Australia, TAFE Educational Books (1974). Curing or crosslinking reactions also may be carried out under ambient conditions. By ambient conditions is meant that the coating undergoes a thermosetting reaction without the aid of heat or other energy, for example, without baking in an oven, use of forced air, or the like. Usually ambient temperature ranges from 60 to 90 °F (15.6 to 32.2 °C), such as a typical room temperature, 72°F (22.2°C). Once cured or crosslinked, a thermosetting resin will not melt upon the application of heat and is insoluble in solvents. As used in this specification and the appended claims, the articles "a," "an," and "the" include plural referents, and are used interchangeably with the terms "at least one" and "one or more", unless expressly and unequivocally limited to one referent.

The term "reactive" refers to a functional group capable of undergoing a chemical reaction with itself and/or other functional groups spontaneously or upon the application of heat or in the presence of a catalyst or by any other means known to those skilled in the art.

By "essentially free" of a material is meant that a composition has only trace or incidental amounts of a given material, and that the material is not present in an amount sufficient to affect any properties of the composition. These materials are not essential to the composition and hence the composition is free of these materials in any appreciable or essential amount. If they are present, it is in incidental amounts only, typically less than 0.1 percent by weight, based on the total weight of solids in the composition.

As used herein, the term "polymer" is meant to refer to prepolymers, oligomers and both homopolymers and copolymers; the prefix "poly" refers to two or more. By "composite material" is meant a combination of two or more differing materials.

The aqueous coating composition according to the present invention comprises
(a) a film-forming resin selected from polyesters made from monomers comprising a polyetherpolyol and a polycarboxylic acid, the polyester bearing functional groups and having a Tg of less than -10°C measured according to ASTM D3418-15 (midpoint temperature, at a heating rate of 20°C/min);
(b) a rheology modifier selected from inorganic and resinous rheology modifiers and combinations thereof;
(c) one or more color-imparting pigments or effect pigments or combinations thereof; and
(d) one or more cross-linking agents that are reactive with the functional groups of the film-forming resin according to a),
wherein the coating composition exhibits a low shear viscosity of 0.5 to 40 Pas at 0.1 s⁻¹ at 25°C measured according to ASTM 22196-15 Method B Spindle No LV-1.

### Polyester (a):

The polyester resin according to the present invention is made from monomers comprising a polyetherpolyol and a polycarboxylic acid. Suitable polyetherpolyols may have no more than two hydroxyl groups per molecule and may be selected from poly(tetrahydrofuran), poly(ethylene oxide), poly(propylene oxide) and combinations thereof. Particularly, the polyetherpolyol may be selected from poly(tetrahydrofuran)s. The number average molecular weight of suitable polyetherpolyols particularly poly(tetrahydrofuran)s may be in the range of 200 to 2000, suitably 200 to 1000 or 200 to 600, measured using gel permeation chromatography using polystyrene standards with tetrahydrofuran as the mobile phase and refractive index as the detection method.

Suitable polycarboxylic acids may be selected from trimellitic acid, 1,3-cyclohexanedicarboxylic acid, dodecanedioic acid, sebacic acid, azelaic acid, maleic acid, fumaric acid, succinic acid, adipic acid, citric acid, tartaric acid, 2,6-naphthalenepolycarboxylic acid, glutaric acid, itatonic acid and anhydrides thereof and combinations thereof. The monomers for making the polyester may be substantially or completely free of fatty acid dimers.

The polyester according to the present invention may be a branched polyester. Branching can be achieved by employing monomers having at least three hydrxoxyl groups and/or carboxylic acid groups in the preparation of the polyester according to the present invention.

Suitably, the monomers for making the polyester according to the present invention comprise a polycarboxylic acid having at least three polycarboxylic acid groups or anhydrides thereof, such as trimellitic acid and/or its anhydride. The proportion of polycarboxylic acid having at least three polycarboxylic acid groups or anhydrides thereof such as trimellitic acid and/or its anhydride may be at least 45 mol-%, suitably at least 60 mol-% or at least 80 mol-% based on the total amount of polycarboxylic acids. Polycarboxylic acids having at least three polycarboxylic acid groups or anhydrides thereof such as trimellitic acid and/or its anhydride also may be the sole polycarboxylic acid in the monomer mixture for making the polyester according to the present invention. If present other carboxylic acids may be selected from those given above.

It is also possible to employ instead or in addition to the polycarboxylic acid having at least three polycarboxylic acid groups or anhydrides thereof monomers having at least three hydroxyl groups to achieve branching. Examples of suitable polyols having as least three hydroxyl groups are trimethylol propane, glycerol, pentaerythritol, and tris(hydroxyethyl)isocyanurate. Monomers bearing a combination of hydroxyl groups and carboxylic acid groups wherein the total number of hydroxyl groups and carboxylic acid groups is at least three such as dimethylol propionic acid may also be used.

In addition to the polyetherpolyols the monomer mixture for making the polyester according to the present invention may comprise monomeric polyols and/or oligomeric polyols other than polyetherpolyols. Examples of suitable monomeric polyols are ethylene glycol , propanediol, butanediol, pentanediol, hexanediol, cyclohexanediol, neopentyl glycol, cyclohexane dimethanol, isosorbide, and 2,2,4-trimethyl-1,3-propanediol. Examples of suitable oligomeric polyols are polyurethane polyols and polycarbonate polyols.

It is particularly suitable to use a monomer mixture comprising trimellitic acid and/or its anhydride and a polyetherpolyol as sole polyol component for making the polyester according to the present invention.

According to the present invention the monomers for making the polyester according to the present invention are selected to provide a polyester having a Tg of less than
- 10°C measured according to ASTM D3418-15 (midpoint temperature, at a heating rate of 20°C/min). Suitably the T_{g} is less than -20°, or less than -30°C, or less than -40°C, or less than -45°C, or less than -50°C, or less than -55°C, or less than -60°C. The lower limit of a suitable Tg range for the polyester according to the present invention is -100°C, or -90°C, or
- 85°C or -80°C.

The polyesters according to the present invention bears functional groups that may be selected from hydroxyl groups, carboxylic acid groups and combinations thereof. Thereby the polyester is curable by a cross-linking agent that is reactive with the functional groups on the polyester. The polyesters according to the present invention may have an acid number of 15 - 50 mg KOH/g, or 15 - 45 mg KOH/g, or 20 - 40 mg KOH/g, or 25 - 35 mg KOH/g. The polyesters according to the present invention may have a hydroxyl number of 30 - 90 mg KOH/g, or 30 - 85 mg KOH/g, or 35 - 80 mg KOH/g, or 35 - 75 mg KOH/g, or 35 - 70 mg KOH/g, or 35 - 65 mg KOH/g, or 35 - 60 mg KOH/g, or 40 - 55 mg KOH/g, or 40 - 50 mg KOH/g.

The polyesters according to the present invention may have a weight average molecular weight of 10,000 - 100,000 measured using gel permeation chromatography using polystyrene standards with tetrahydrofuran as the mobile phase and refractive index as the detection method. A suitable range for the weight average molecular weight is 15,000 - 95,000, or 20,000 - 90,000, or 25,000 - 85,000, or 30,000 - 80,000, or 35,000 - 75,000, or 40,000 - 70,000, or 45,000 - 65,000, or 50,000 - 60,000.

The polyesters according to the present invention can be prepared by any standard method for preparation of polyesters known to the person skilled in the art. Suitable methods are neat polymerization of the monomers while removing the water resulting from the condensation reaction. It is also possible to use a polymerization process in an inert organic solvent, that may be subsequently removed. The polyesters according to the present invention can be dispersed in water by neutralizing the carboxylic acid groups. Suitable bases to be used for the neutralization may comprise alkali metal hydroxide like sodium hydroxide or potassium hydroxide, alkali metal carbonates, ammonia, amines particularly tertiary amines for example dimethyl ethanol amine and combinations thereof. Water for forming the aqueous dispersion of the polyester may be added simultaneously and/or subsequently to the neutralization of the polyester.

### Cross-linking agent (d)

Cross-linking agents that can be suitably used according to the present invention may be any cross-linking agents that are reactive with the functional groups on the polyester according to the present invention. Particularly useful are cross-linking agents that are reactive with hydroxyl and/or carboxylic acid groups. Examples of such cross-linking agents include at least partially alkylated aminoplasts, including fully alkylated aminoplasts (for example, at least partially alkylated aminoplast resins with amino functional groups making up less than 10 mol% of the total functional groups), high imino aminoplasts (i. e., imino functional aminoplasts comprising at least 15 mol percent imino functional groups), polyisocyanates, including blocked isocyanates, polyepoxides, beta-hydroxyalkylamides, polyacids, dihydrazides, carbodiimides, polyols and mixtures of any of the foregoing, and include those known in the art for any of these materials.

Useful aminoplasts can be obtained from the condensation reaction of formaldehyde with an amine or amide. Nonlimiting examples of amines or amides include melamine, urea and benzoguanamine.

Although condensation products obtained from the reaction of alcohols and formaldehyde with melamine, urea or benzoguanamine are most common, condensates with other amines or amides can be used. Formaldehyde is the most commonly used aldehyde, but other aldehydes such as acetaldehyde, crotonaldehyde, and benzaldehyde can also be used.

The aminoplast can contain imino and methylol groups. In certain instances, at least a portion of the methylol groups can be etherified with an alcohol to modify the cure response. Any monohydric alcohol like methanol, ethanol, n-butyl alcohol, isobutanol, and hexanol can be employed for this purpose. Nonlimiting examples of suitable aminoplast resins are commercially available from Cytec Industries, Inc. under the trademark CYMEL® and from Solutia, Inc. under the trademark RESIMENE®.

Often the crosslinking agent comprises an at least partially alkylated aminoplast resin comprising less than 15 mol percent imino functional groups (i. e., a "low imino" aminoplast) and optionally an imino functional aminoplast comprising at least 15 mol percent imino functional groups (i. e., a "high imino" aminoplast), wherein the mass ratio of at least partially alkylated aminoplast resin to imino functional aminoplast is 100:0 to 10:90, such as 90:10 to 10:90, or 80:20 to 20:80, or 70:30 to 30:70, or 60:40 to 40:60. The at least partially alkylated aminoplast resin provides improved appearance properties while the high imino aminoplast contributes to faster film cure speeds and higher cured film hardness, compared to film-forming compositions that do not contain these aminoplasts.

Other crosslinking agents suitable for use include polyisocyanate crosslinking agents. As used herein, the term "polyisocyanate" is intended to include blocked (or capped) polyisocyanates as well as unblocked polyisocyanates. The polyisocyanate can be aliphatic, aromatic, or a mixture thereof. Although higher polyisocyanates such as isocyanurates of diisocyanates are often used, diisocyanates can also be used. Isocyanate prepolymers, for example reaction products of polyisocyanates with polyols also can be used. Mixtures of polyisocyanate crosslinking agents can be used.

The polyisocyanate can be prepared from a variety of isocyanate-containing materials. Examples of suitable polyisocyanates include trimers prepared from the following diisocyanates: toluene diisocyanate, 4,4'-methylene-bis(cyclohexyl isocyanate), isophorone diisocyanate, an isomeric mixture of 2,2,4- and 2,4,4-trimethyl hexamethylene diisocyanate, 1,6-hexamethylene diisocyanate, tetramethyl xylylene diisocyanate and 4,4'-diphenylmethylene diisocyanate. In addition, blocked polyisocyanate prepolymers of various polyols such as polyester polyols can also be used.

Isocyanate groups may be capped or uncapped as desired. If the polyisocyanate is to be blocked or capped, any suitable aliphatic, cycloaliphatic, or aromatic alkyl monoalcohol or phenolic compound known to those skilled in the art can be used as a capping agent for the polyisocyanate. Examples of suitable blocking agents include those materials which would unblock at elevated temperatures such as lower aliphatic alcohols including methanol, ethanol, and n-butanol; cycloaliphatic alcohols such as cyclohexanol; aromatic-alkyl alcohols such as phenyl carbinol and methylphenyl carbinol; and phenolic compounds such as phenol itself and substituted phenols wherein the substituents do not affect coating operations, such as cresol and nitrophenol. Glycol ethers may also be used as capping agents. Suitable glycol ethers include ethylene glycol butyl ether, diethylene glycol butyl ether, ethylene glycol methyl ether and propylene glycol methyl ether. Other suitable capping agents include oximes such as methyl ethyl ketoxime, acetone oxime and cyclohexanone oxime, lactams such as epsilon-caprolactam, pyrazoles such as dimethyl pyrazole, and amines such as dibutyl amine.

Polyepoxides are suitable curing agents for polymers having carboxylic acid groups and/or amine groups. Examples of suitable polyepoxides include low molecular weight polyepoxides such as 3,4-epoxycyclohexylmethyl 3,4-epoxycyclohexanecarboxylate and bis(3,4-epoxy-6-methylcyclohexyl-methyl) adipate. Higher molecular weight polyepoxides, including the polyglycidyl ethers of polyhydric phenols and alcohols described above, are also suitable as crosslinking agents.

Beta-hydroxyalkylamides are suitable curing agents for polymers having carboxylic acid groups. The beta-hydroxyalkylamides can be depicted structurally as follows: 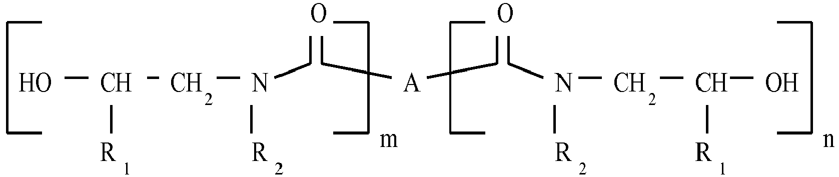 wherein R₁ is H or C₁ to C₅ alkyl; R₂ is H, C₁ to C₅ alkyl, or: 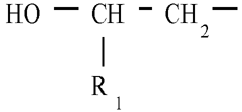 wherein R₁ is as described above; A is a bond or a polyvalent organic radical derived from a saturated, unsaturated, or aromatic hydrocarbon including substituted hydrocarbon radicals containing from 2 to 20 carbon atoms; m is equal to 1 or 2; n is equal to 0 or 2, and m+n is at least 2, usually within the range of from 2 up to and including 4. Most often, A is a C₂ to C₁₂ divalent alkylene radical.

Suitable polyacids and polyols useful as curing agents include any of those known in the art, such as those described herein for the making of polyesters.

Examples of dihydrazides are maleic dihydrazide, fumaric dihydrazide, itaconic dihydrazide, phthalic dihydrazide, isophthalic dihydrazide, terephthalic dihydrazide, oxalic dihydrazide, adipic dihydrazide and sebacic dihydrazide.

Suitable carbodiimide crosslinkers include an aliphatic and/or cycloaliphatic dinitrogen analogue of carbonic acid of the generalized structure: RN=C=NR₁ where R and R₁ are independently aliphatic or cycloaliphatic groups. The aliphatic groups can comprise 1-6 carbon atoms. Examples include dibutyl carbodiimide and dicyclohexyl carbodiimide. Oligomeric or polymeric carbodiimide crosslinkers can also be used. Examples of such materials are disclosed in US 2009/0246393A1. Aliphatic carbodiimides are particularly useful when the waterborne coating composition is used as a monocoat.

The preparation of water dispersible carbodiimide crosslinkers is well known in the art. Suitable water dispersible carbodiimide crosslinkers can be prepared by incorporating minor amounts of an amine, such as dimethyl aminopropylamine, and an alkyl sulfonate or sulfate into the carbodiimide structure. Suitable water dispersible carbodiimides can also be prepared by incorporating polyethylene oxide or polypropylene oxide into the carbodiimide structure.

Suitable water dispersible carbodiimides are commercially available. For example, UCARLINK XL-29SE, XL-20 is commercially available from Union Carbide and CARBODILITE VO2-L2 is commercially available from Nisshinbo Industries, Inc.

Appropriate mixtures of crosslinking agents may also be used in the invention. The amount of the crosslinking agent in the curable film-forming composition generally ranges from 3 to 50 percent by weight based on the total weight of resin solids in the curable film-forming composition. For example, the minimum amount of crosslinking agent may be at least 3 percent by weight or at least 5 percent by weight, often at least 10 percent by weight and more often, at least 15 percent by weight. The maximum amount of crosslinking agent may be 50 percent by weight, more often 45 percent by weight, or 40 percent by weight, or 35 percent by weight. Ranges of crosslinking agent may include, for example, 5 to 45 percent by weight, 5 to 40 percent by weight, 10 to 40 percent by weight, 10 to 45 percent by weight, 10 to 15 percent by weight, 15 to 35 percent by weight, 15 to 40 percent by weight, and 15 to 45 percent by weight.

### Pigment (c)

The coating composition of the present invention comprises one or more color-imparting pigments or effect pigments or combinations thereof. As used herein, the term effect pigment means any substance that imparts other opacity and/or other visual effect to the composition. The pigments can be added to the coating in any suitable form, such as discrete particles, dispersions, solutions and/or flakes. A single pigment or a mixture of two or more pigments can be used in the coatings of the present invention.

Example pigments include pigments, dyes and tints, such as those used in the paint industry and/or listed in the Dry Color Manufacturers Association (DCMA), as well as special effect compositions. A pigment may include, for example, a finely divided solid powder that is insoluble but wettable under the conditions of use. A pigment can be organic or inorganic and can be agglomerated or non-agglomerated. Pigments can be incorporated into the coatings by grinding or simple mixing. Pigments can be incorporated by grinding into the coating by use of a grind vehicle, such as an acrylic grind vehicle or more suitably the polyester (a) according to the present invention, the use of which will be familiar to one skilled in the art.

Example pigments and/or pigment compositions include, but are not limited to, carbazole dioxazine crude pigment, azo, monoazo, disazo, naphthol AS, salt type (lakes), benzimidazolone, condensation, metal complex, isoindolinone, isoindoline and polycyclic phthalocyanine, quinacridone, perylene, perinone, diketopyrrolo pyrrole, thioindigo, anthraquinone, indanthrone, anthrapyrimidine, flavanthrone, pyranthrone, anthanthrone, dioxazine, triarylcarbonium, quinophthalone pigments, diketo pyrrolo pyrrole red ("DPPBO red"), titanium dioxide, carbon black and mixtures thereof. The terms "pigment" and "colored filler" can be used interchangeably.

Example dyes include, but are not limited to, those that are solvent and/or aqueous based such as acid dyes, azoic dyes, basic dyes, direct dyes, disperse dyes, reactive dyes, solvent dyes, sulfur dyes, mordant dyes, for example, bismuth vanadate, anthraquinone, perylene, aluminum, quinacridone, thiazole, thiazine, azo, indigoid, nitro, nitroso, oxazine, phthalocyanine, quinoline, stilbene, and triphenyl methane.

Suitable examples of inorganic pigments are titanium dioxide, barium sulfate, zinc oxide, zinc sulfide, basic lead carbonate, antimony trioxide, iron oxides, carbon black, graphite, zinc yellow, zinc green, ultramarine, manganese black, antimony black, manganese violet, Paris blue or Schweinfurt green.

As noted above, the colorant can be in the form of a dispersion including, but not limited to, a nanoparticle dispersion. Nanoparticle dispersions can include one or more highly dispersed nanoparticle colorants and/or colorant particles that produce a desired visible color and/or opacity and/or visual effect. Nanoparticle dispersions can include colorants such as pigments or dyes having a particle size of less than 150 nm, such as less than 70 nm, or less than 30 nm. Nanoparticles can be produced by milling stock organic or inorganic pigments with grinding media having a particle size of less than 0.5 mm. Example nanoparticle dispersions and methods for making them are identified in U.S. Patent No. 6,875,800 B2, which is incorporated herein by reference. Nanoparticle dispersions can also be produced by crystallization, precipitation, gas phase condensation, and chemical attrition (i.e., partial dissolution). In order to minimize re-agglomeration of nanoparticles within the coating, a dispersion of resin-coated nanoparticles can be used. As used herein, a "dispersion of resin-coated nanoparticles" refers to a continuous phase in which is dispersed discrete "composite microparticles" that comprise a nanoparticle and a resin coating on the nanoparticle. Example dispersions of resin-coated nanoparticles and methods for making them are identified in U.S. Application No. 10/876,031 filed June 24, 2004, which is incorporated herein by reference, and U.S. Provisional Application No. 60/482,167 filed June 24, 2003, which is also incorporated herein by reference.

Example special effect compositions that may be used in the coating of the present invention include pigments and/or compositions that produce one or more appearance effects such as reflectance, pearlescence, metallic sheen, phosphorescence, fluorescence, photochromism, photosensitivity, thermochromism, goniochromism and/or color-change. Additional special effect compositions can provide other perceptible properties, such as reflectivity, opacity or texture. Special effect compositions can produce a color shift, such that the color of the coating changes when the coating is viewed at different angles. Example color effect compositions are identified in U.S. Patent No. 6,894,086, incorporated herein by reference. Additional color effect compositions can include transparent coated mica and/or synthetic mica, coated silica, coated alumina, a transparent liquid crystal pigment, a liquid crystal coating, and/or any composition wherein interference results from a refractive index differential within the material and not because of the refractive index differential between the surface of the material and the air.

A photosensitive composition and/or photochromic composition, which reversibly alters its color when exposed to one or more light sources, can be used in the coating of the present invention. Photochromic and/or photosensitive compositions can be activated by exposure to radiation of a specified wavelength. When the composition becomes excited, the molecular structure is changed and the altered structure exhibits a new color that is different from the original color of the composition. When the exposure to radiation is removed, the photochromic and/or photosensitive composition can return to a state of rest, in which the original color of the composition returns. In one example, the photochromic and/or photosensitive composition can be colorless in a non-excited state and exhibit a color in an excited state. Full color-change can appear within milliseconds to several minutes, such as from 20 seconds to 60 seconds. Example photochromic and/or photosensitive compositions include photochromic dyes.

The photosensitive composition and/or photochromic composition can be associated with and/or at least partially bound to, such as by covalent bonding, a polymer and/or polymeric materials of a polymerizable component. In contrast to some coatings in which the photosensitive composition may migrate out of the coating and crystallize into the substrate, the photosensitive composition and/or photochromic composition associated with and/or at least partially bound to a polymer and/or polymerizable component have minimal migration out of the coating. Example photosensitive compositions and/or photochromic compositions and methods for making them are identified in U.S. Application Serial No. 10/892,919 filed July 16, 2004 and incorporated herein by reference.

In general, the pigments can be present in the coating composition in any amount sufficient to impart the desired property, visual and/or color effect. The pigments may comprise from 1 to 65 weight percent of the present compositions, such as from 3 to 40 weight percent or 5 to 35 weight percent, with weight percent based on the total weight of the compositions. A suitable pigment to resin ration (w/w) is 0.1:1 to 2:1 such as 0.2:1 to 1.4:1.

The coating composition of the present invention can be suitably used particularly if the color-imparting pigments comprise white pigments. Suitable white pigments may be selected from titanium dioxide, barium sulfate, zinc oxide and zinc sulfide

### Rheology modifier (b)

The coating composition according to the present invention comprises a rheology modifier selected from inorganic and resinous rheology modifiers and combination thereof. Suitable inorganic rheology modifier nay be selected from clays, fumed silicas and sheet silicates. Sheet silicate are particularly useful rheology modifiers.

Resinous rheology modifiers that are useful according to the present invention may be selected from cellulosic thickeners, acrylic thickeners and polyurethane thickners.

The type and amount of rheology modifiers are selected in combination with the other ingredients of the coating composition of the present invention to obtain an aqueous coating composition that exhibits a low shear viscosity of 0.5 to 40 Pas at 0.1 s⁻¹ at 25°C measured according to ASTM 22196-15 Method B Spindle No LV-1. Suitable ranges for the low shear viscosity are 1 to 30 Pas, or 1 to 25 Pas, or 1 to 20 Pas, or 1 to 15 Pas, or 2 to 12 Pas at 0.1 s⁻¹ at 25°C.

### Additional film-forming resin (e)

The additional film-forming resin that optionally might be present in the coating composition according to the present invention has functional groups that are reactive with the crosslinking agent (d), including acid and/or hydroxyl groups as noted above. The additional polymer may be selected from at least one of acrylic polymers, polyesters, polyurethanes, polyurea, polyamides, polycarbonates, polyolefins, polyepoxides and polyethers. The polymer may also be a hybrid copolymer of different types of these polymers, such as an acrylic polymer grafted to a polyester or polyurethane polymer. Generally these polymers can be any polymers of these types made by any method known to those skilled in the art where the polymers are water dispersible, emulsifiable, or of limited water solubility. Other functional groups may be selected from at least one of amine groups, epoxide groups, thiol groups, carbamate groups, amide groups, urea groups, and mercaptan groups.

Suitable acrylic polymers include copolymers of one or more alkyl esters of acrylic acid or methacrylic acid, optionally together with one or more other polymerizable ethylenically unsaturated monomers. Useful alkyl esters of acrylic acid or methacrylic acid include aliphatic alkyl esters containing from 1 to 30, and usually 4 to 18 carbon atoms in the alkyl group. Non-limiting examples include methyl methacrylate, ethyl methacrylate, butyl methacrylate, ethyl acrylate, butyl acrylate, and 2-ethyl hexyl acrylate. Suitable other copolymerizable ethylenically unsaturated monomers include vinyl aromatic compounds such as styrene and vinyl toluene; nitriles such as acrylonitrile and methacrylonitrile; vinyl and vinylidene halides such as vinyl chloride and vinylidene fluoride and vinyl esters such as vinyl acetate.

Hydroxyl functional groups are often incorporated into the acrylic polymer by including one or more hydroxyl functional monomers in the reactants used to produce the copolymer. Useful hydroxyl functional monomers include hydroxyalkyl acrylates and methacrylates, typically having 2 to 4 carbon atoms in the hydroxyalkyl group, such as hydroxyethyl acrylate, hydroxypropyl acrylate, 4-hydroxybutyl acrylate, hydroxy functional adducts of caprolactone and hydroxyalkyl acrylates, and corresponding methacrylates, as well as the beta-hydroxy ester functional monomers described below. The acrylic polymer can also be prepared with N-(alkoxymethyl)acrylamides and N-(alkoxymethyl)methacrylamides.

Beta-hydroxy ester functional monomers can be prepared as noted above.

Carbamate functional groups can be included in the acrylic polymer by copolymerizing the acrylic monomers with a carbamate functional vinyl monomer, such as a carbamate functional alkyl ester of methacrylic acid, or by reacting a hydroxyl functional acrylic polymer with a low molecular weight carbamate functional material, such as can be derived from an alcohol or glycol ether, via a transcarbamoylation reaction. Alternatively, carbamate functionality may be introduced into the acrylic polymer by reacting a hydroxyl functional acrylic polymer with a low molecular weight carbamate functional material, such as can be derived from an alcohol or glycol ether, via a transcarbamoylation reaction. In this reaction, a low molecular weight carbamate functional material derived from an alcohol or glycol ether is reacted with the hydroxyl groups of the acrylic polyol, yielding a carbamate functional acrylic polymer and the original alcohol or glycol ether. The low molecular weight carbamate functional material derived from an alcohol or glycol ether may be prepared by reacting the alcohol or glycol ether with urea in the presence of a catalyst. Suitable alcohols include lower molecular weight aliphatic, cycloaliphatic, and aromatic alcohols such as methanol, ethanol, propanol, butanol, cyclohexanol, 2-ethylhexanol, and 3-methylbutanol. Suitable glycol ethers include ethylene glycol methyl ether and propylene glycol methyl ether. Propylene glycol methyl ether and methanol are most often used. Other carbamate functional monomers as known to those skilled in the art may also be used.

Amide functionality may be introduced to the acrylic polymer by using suitably functional monomers in the preparation of the polymer, or by converting other functional groups to amido- groups using techniques known to those skilled in the art. Likewise, other functional groups may be incorporated as desired using suitably functional monomers if available or conversion reactions as necessary.

Acrylic polymers can be prepared via aqueous emulsion polymerization techniques and used directly in the preparation of aqueous coating compositions, or can be prepared via organic solution polymerization techniques for solventborne compositions. When prepared via organic solution polymerization with groups capable of salt formation such as acid or amine groups, upon neutralization of these groups with a base or acid the polymers can be dispersed into aqueous medium. Generally any method of producing such polymers that is known to those skilled in the art utilizing art recognized amounts of monomers can be used.

According to the present invention it might be useful if the additional firm-forming resin (e) contains less than 5% such as less than 1% based on total resin solids of resinous components comprising only acrylic repeating units.

Besides acrylic polymers, the additional resin (e) may be an alkyd resin or a polyester. Such polymers may be prepared in a known manner by condensation of polyhydric alcohols and polycarboxylic acids. Suitable polyhydric alcohols include, but are not limited to, ethylene glycol, propylene glycol, butylene glycol, 1,6-hexylene glycol, neopentyl glycol, diethylene glycol, glycerol, trimethylol propane, and pentaerythritol. Suitable polycarboxylic acids include, but are not limited to, succinic acid, adipic acid, azelaic acid, sebacic acid, maleic acid, fumaric acid, phthalic acid, tetrahydrophthalic acid, hexahydrophthalic acid, and trimellitic acid. Besides the polycarboxylic acids mentioned above, functional equivalents of the acids such as anhydrides where they exist or lower alkyl esters of the acids such as the methyl esters may be used. Where it is desired to produce air-drying alkyd resins, suitable drying oil fatty acids may be used and include, for example, those derived from linseed oil, soya bean oil, tall oil, dehydrated castor oil, or tung oil.

Likewise, polyamides may be prepared utilizing polyacids and polyamines. Suitable polyacids include those listed above and polyamines may be selected from at least one of ethylene diamine, 1,2-diaminopropane, 1,4-diaminobutane, 1,3-diaminopentane, 1,6-diaminohexane, 2-methyl-1,5-pentane diamine, 2,5-diamino-2,5-dimethylhexane, 2,2,4- and/or 2,4,4-trimethyl-1,6-diamino-hexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4'- and/or 4,4'-diamino-dicyclohexyl methane and 3,3'-dialkyl4,4'-diamino-dicyclohexyl methanes (such as 3,3'-dimethyl-4,4'-diamino-dicyclohexyl methane and 3,3'-diethyl-4,4'-diamino-dicyclohexyl methane), 2,4- and/or 2,6-diaminotoluene and 2,4'- and/or 4,4'-diaminodiphenyl methane.

Carbamate functional groups may be incorporated into the polyester or polyamide by first forming a hydroxyalkyl carbamate which can be reacted with the polyacids and polyols/polyamines used in forming the polyester or polyamide. The hydroxyalkyl carbamate is condensed with acid functionality on the polymer, yielding terminal carbamate functionality. Carbamate functional groups may also be incorporated into the polyester by reacting terminal hydroxyl groups on the polyester with a low molecular weight carbamate functional material via a transcarbamoylation process similar to the one described above in connection with the incorporation of carbamate groups into the acrylic polymers, or by reacting isocyanic acid with a hydroxyl functional polyester.

Other functional groups such as amine, amide, thiol, and urea may be incorporated into the polyamide, polyester or alkyd resin as desired using suitably functional reactants if available, or conversion reactions as necessary to yield the desired functional groups. Such techniques are known to those skilled in the art.

Polyurethanes can also be used as the additional resin (e). Among the polyurethanes which can be used are polymeric polyols which generally are prepared by reacting the polyester polyols or acrylic polyols such as those mentioned above with a polyisocyanate such that the OH/NCO equivalent ratio is greater than 1:1 so that free hydroxyl groups are present in the product. The organic polyisocyanate which is used to prepare the polyurethane polyol can be an aliphatic or an aromatic polyisocyanate or a mixture of the two. Diisocyanates are typically used, although higher polyisocyanates can be used in place of or in combination with diisocyanates. Examples of suitable aromatic diisocyanates are 4,4'-diphenylmethane diisocyanate and toluene diisocyanate. Examples of suitable aliphatic diisocyanates are straight chain aliphatic diisocyanates such as 1,6-hexamethylene diisocyanate. Also, cycloaliphatic diisocyanates can be employed. Examples include isophorone diisocyanate and 4,4'-methylene-bis-(cyclohexyl isocyanate). Examples of suitable higher polyisocyanates are 1,2,4-benzene triisocyanate and polymethylene polyphenyl isocyanate. As with the polyesters, the polyurethanes can be prepared with unreacted carboxylic acid groups, which upon neutralization with bases such as amines allows for dispersion into aqueous medium.

Terminal and/or pendent carbamate functional groups can be incorporated into the polyurethane by reacting a polyisocyanate with a polymeric polyol containing the terminal/pendent carbamate groups. Alternatively, carbamate functional groups can be incorporated into the polyurethane by reacting a polyisocyanate with a polyol and a hydroxyalkyl carbamate or isocyanic acid as separate reactants. Carbamate functional groups can also be incorporated into the polyurethane by reacting a hydroxyl functional polyurethane with a low molecular weight carbamate functional material via a transcarbamoylation process similar to the one described above in connection with the incorporation of carbamate groups into the acrylic polymer. Additionally, an isocyanate functional polyurethane can be reacted with a hydroxyalkyl carbamate to yield a carbamate functional polyurethane.

Other functional groups such as amide, thiol, and urea may be incorporated into the polyurethane as desired using suitably functional reactants if available, or conversion reactions as necessary to yield the desired functional groups. Such techniques are known to those skilled in the art.

A suitable polyurethane resin that can be used as additional resin (d) in the coating composition according to the present invention is a polyurethanepolyol, that may be an urethane acrylic hybrid resin. It is particularly useful to include a combination of a sheet silicate as rheology modifier (b) and a polyurethanepolyol in the coating composition according to the present invention.

Polyurea may be prepared by reacting any of the polyisocyanates described above with a polyamine.

Examples of polyether polyols are polyalkylene ether polyols which include those having the following structural formula:
(i) 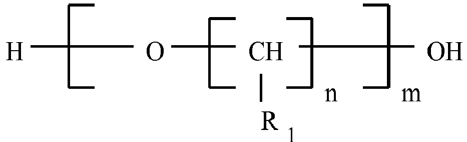 or (ii) 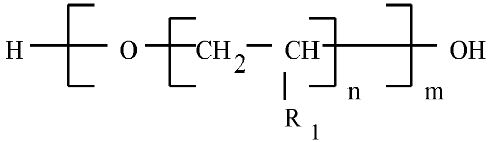 where the substituent R₁ is hydrogen or lower alkyl containing from 1 to 5 carbon atoms including mixed substituents, and n is typically from 2 to 6 and m is from 8 to 100 or higher. Included are poly(oxytetramethylene) glycols, poly(oxytetraethylene) glycols, poly(oxy-1,2-propylene) glycols, and poly(oxy-1,2-butylene) glycols.

Also useful are polyether polyols formed from oxyalkylation of various polyols, for example, diols such as ethylene glycol, 1,6-hexanediol, Bisphenol A and the like, or other higher polyols such as trimethylolpropane, pentaerythritol, and the like. Polyols of higher functionality which can be utilized as indicated can be made, for instance, by oxyalkylation of compounds such as sucrose or sorbitol. One commonly utilized oxyalkylation method is reaction of a polyol with an alkylene oxide, for example, propylene or ethylene oxide, in the presence of an acidic or basic catalyst. Particular polyethers include those sold under the names TERATHANE and TERACOL, available from E. I. Du Pont de Nemours and Company, Inc., and POLYMEG, available from Q O Chemicals, Inc., a subsidiary of Great Lakes Chemical Corp.

Pendant carbamate functional groups may be incorporated into the polyethers by a transcarbamoylation reaction. Other functional groups such as acid, amine, epoxide, amide, thiol, and urea may be incorporated into the polyether as desired using suitably functional reactants if available, or conversion reactions as necessary to yield the desired functional groups.

Suitable epoxy functional polymers for use as additional polymer may include a polyepoxide chain extended by reacting together a polyepoxide and a polyhydroxyl group-containing material selected from alcoholic hydroxyl group-containing materials and phenolic hydroxyl group-containing materials to chain extend or build the molecular weight of the polyepoxide.

A chain extended polyepoxide is typically prepared by reacting together the polyepoxide and polyhydroxyl group-containing material neat or in the presence of an inert organic solvent such as a ketone, including methyl isobutyl ketone and methyl amyl ketone, aromatics such as toluene and xylene, and glycol ethers such as the dimethyl ether of diethylene glycol. The reaction is usually conducted at a temperature of about 80°C to 160° C for about 30 to 180 minutes until an epoxy group-containing resinous reaction product is obtained.

The equivalent ratio of reactants; i. e., epoxy:polyhydroxyl group-containing material is typically from about 1.00:0.75 to 1.00:2.00.

The polyepoxide by definition has at least two 1,2-epoxy groups. In general the epoxide equivalent weight of the polyepoxide will range from 100 to about 2000, typically from about 180 to 500. The epoxy compounds may be saturated or unsaturated, cyclic or acyclic, aliphatic, alicyclic, aromatic or heterocyclic. They may contain substituents such as halogen, hydroxyl, and ether groups.

Examples of polyepoxides are those having a 1,2-epoxy equivalency greater than one and usually about two; that is, polyepoxides which have on average two epoxide groups per molecule. The most commonly used polyepoxides are polyglycidyl ethers of cyclic polyols, for example, polyglycidyl ethers of polyhydric phenols such as Bisphenol A, resorcinol, hydroquinone, benzenedimethanol, phloroglucinol, and catechol; or polyglycidyl ethers of polyhydric alcohols such as alicyclic polyols, particularly cycloaliphatic polyols such as 1,2-cyclohexane diol, 1,4-cyclohexane diol, 2,2-bis(4-hydroxycyclohexyl)propane, 1,1-bis(4-hydroxycyclohexyl)ethane, 2-methyl-1,1-bis(4-hydroxycyclohexyl)propane, 2,2-bis(4-hydroxy-3-tertiarybutylcyclohexyl)propane, 1,3-bis(hydroxymethyl)cyclohexane and 1,2-bis(hydroxymethyl)cyclohexane. Examples of aliphatic polyols include, *inter alia,* trimethylpentanediol and neopentyl glycol.

Polyhydroxyl group-containing materials used to chain extend or increase the molecular weight of the polyepoxide may additionally be polymeric polyols such as those disclosed above.

Epoxy functional film-forming resins may alternatively be acrylic polymers prepared with epoxy functional monomers such as glycidyl acrylate, glycidyl methacrylate, allyl glycidyl ether, and methallyl glycidyl ether. Polyesters, polyurethanes, or polyamides prepared with glycidyl alcohols or glycidyl amines, or reacted with an epihalohydrin are also suitable epoxy functional resins.

The additional film-forming resin (e) may be dispersed in an aqueous medium using conventional techniques known in the art.

The additional film-forming resin (e) may be present in the aqueous coating composition of the present invention in amounts of 0 - 70 percent by weight, such as at least 10 -65 percent by weight, or 20 - 60 percent by weight based on the total weight of resin solids in the coating composition.

The aqueous coating composition of the present invention may further contain adjunct ingredients conventionally used in coating compositions. Optional ingredients such as, for example, plasticizers, surfactants, adhesion promoters, anti-gassing agents, organic cosolvents, flow controllers, anti-oxidants, UV light absorbers and similar additives conventional in the art may be included in the composition. These ingredients are typically present at up to about 40% by weight based on the total weight of resin solids.

The aqueous coating composition of the present invention usually has a total solids content of at least 30 vol.-% based on the total volume of the coating composition, such as at least 35 vol.-% , or at least 40 vol.-%, or at least 45 vol.-%. The coating composition usually contains less than 8 wt.-% such as less than 6 wt.-%, or less than 5 wt.-%, or less than 4 wt.-% or less than 3 wt.-%, or less than 2 wt.-%, or less than 1 wt.-% of organic solvents based on the total weight of the coating composition. The coating composition according to the present invention may also be completely free of organic solvents.

The coating composition according to the present invention can be produced by any method customary in the art of decorative and protective coating compositions. The ingredients of the coating composition my be combined in any order considered suitable by a person skilled in the art. It may be useful to mix component (a) and (c) to provide a pigment paste; and than to combining the remaining components of the coating composition with the pigment paste in any order. The component (a) may be the sole resin component in the pigment paste.

The composite multilayer coatings of the present invention comprise:
(i) an electrocoating layer deposited from an electrophoretically applied coating composition;
(ii) a base coating layer deposited from the coating composition of the present invention directly onto the electrocoating layer; and
(iii) a clear coating layer deposited directly onto the base coating layer.

A substrates described comprising the above composite multilayer coating may be prepared using a method for forming a composite coating on a substrate in accordance with the present invention, comprising:
(A) depositing the coating composition of the present invention onto the cured electrodeposition coating layer of an electro-coated substrate;
(B) optionally flashing the coating layer obtained in step (A);
(C) depositing a clear coating composition onto the coating layer obtained in step (A) or step (B) if step (B) is performed;
(D) simultaneous curing of the coating layers applied in step (A) and (C).

Non-metallic substrates A) include polymeric, plastic, polyester, polyolefin, polyamide, cellulosic, polystyrene, polyacrylic, poly(ethylene naphthalate), polypropylene, polyethylene, nylon, EVOH, poly(lactic acid), other "green" polymeric substrates, poly(ethylene terephthalate) ("PET"), polycarbonate, polycarbonate acrylonitrile butadiene styrene ("PC/ABS"), polyamide, polymer composites and the like. Car parts typically formed from thermoplastic and thermoset materials include bumpers and trim.

The metal substrates used in the present invention include ferrous metals, nonferrous metals and combinations thereof. Suitable ferrous metals include iron, steel, and alloys thereof. Non-limiting examples of useful steel materials include cold rolled steel, pickled steel, steel surface-treated with any of zinc metal, zinc compounds and zinc alloys (including electrogalvanized steel, hot-dipped galvanized steel, GALVANNEAL steel, and steel plated with zinc alloy,) and/or zinc-iron alloys. Also, aluminum, aluminum alloys, zinc-aluminum alloys such as GALFAN, GALVALUME, aluminum plated steel and aluminum alloy plated steel substrates may be used, as well as magnesium metal, titanium metal, and alloys thereof. Steel substrates (such as cold rolled steel or any of the steel substrates listed above) coated with a weldable, zinc-rich or iron phosphide-rich organic coating are also suitable for use in the present invention. Such weldable coating compositions are disclosed in U. S. Patent Nos. 4,157,924 and 4,186,036. Cold rolled steel is also suitable when pretreated with an appropriate solution known in the art, such as a metal phosphate solution, an aqueous solution containing at least one Group IIIB or IVB metal, an organophosphate solution, an organophosphonate solution, and combinations thereof, as discussed below.

The substrate may alternatively comprise more than one metal or metal alloy in that the substrate may be a combination of two or more metal substrates assembled together such as hot-dipped galvanized steel assembled with aluminum substrates. The substrate may alternatively comprise a composite material such as a fiberglass composite. It is desirable to have a coating system which can be applied to both metal and non-metal parts. The substrate may comprise part of a vehicle. "Vehicle" is used herein in its broadest sense and includes all types of vehicles, such as but not limited to airplanes, helicopters, cars, trucks, buses, vans, golf carts, motorcycles, bicycles, railroad cars, tanks and the like. It will be appreciated that the portion of the vehicle that is coated according to the present invention may vary depending on why the coating is being used.

The shape of the substrate can be in the form of a sheet, plate, bar, rod or any shape desired, but it is usually in the form of an automobile part, such as a body, door, fender, hood or bumper. The thickness of the substrate can vary as desired.

The substrates to be used may be bare substrates. By "bare" is meant a virgin substrate that has not been treated with (or has been stripped of) any pretreatment compositions such as conventional phosphating baths, heavy metal rinses, etc. Additionally, bare metal substrates being used in the present invention may be a cut edge of a substrate that is otherwise treated and/or coated over the rest of its surface. Alternatively, the substrates may undergo one or more treatment steps known in the art prior to the application of the electrodepositable film-forming composition.

Before depositing any coating compositions upon the surface of the substrate, it is common practice, though not necessary, to remove foreign matter or previously applied paints such as OEM coatings from the surface by thoroughly stripping, cleaning and degreasing the surface. When the substrate is not an existing vehicle part, such cleaning typically takes place after forming the substrate (stamping, welding, etc.) into an end-use shape. The surface of the substrate can be cleaned by physical or chemical means, or both, such as mechanically abrading the surface (e. g., sanding) or cleaning/degreasing with commercially available alkaline or acidic cleaning agents which are well known to those skilled in the art, such as sodium metasilicate and sodium hydroxide. A non-limiting example of a cleaning agent is CHEMKLEEN 163, an alkaline-based cleaner commercially available from PPG Industries, Inc.

In an OEM setting, a metal substrate may optionally be pretreated with any suitable solution known in the art, such as a metal phosphate solution, an aqueous solution containing at least one Group IIIB or IVB metal, an organophosphate solution, an organophosphonate solution, and combinations thereof. The pretreatment solutions may be essentially free of environmentally detrimental heavy metals such as chromium and nickel. Suitable phosphate conversion coating compositions may be any of those known in the art that are free of heavy metals. Examples include zinc phosphate, which is used most often, iron phosphate, manganese phosphate, calcium phosphate, magnesium phosphate, cobalt phosphate, zinc-iron phosphate, zinc-manganese phosphate, zinc-calcium phosphate, and layers of other types, which may contain one or more multivalent cations. Phosphating compositions are known to those skilled in the art and are described in U. S. Patents 4,941,930, 5,238,506, and 5,653,790.

The IIIB or IVB transition metals and rare earth metals referred to herein are those elements included in such groups in the CAS Periodic Table of the Elements as is shown, for example, in the Handbook of Chemistry and Physics, 63rd Edition (1983).

Typical group IIIB and IVB transition metal compounds and rare earth metal compounds are compounds of zirconium, titanium, hafnium, yttrium and cerium and mixtures thereof. Typical zirconium compounds may be selected from hexafluorozirconic acid, alkali metal and ammonium salts thereof, ammonium zirconium carbonate, zirconyl nitrate, zirconium carboxylates and zirconium hydroxy carboxylates such as hydrofluorozirconic acid, zirconium acetate, zirconium oxalate, ammonium zirconium glycolate, ammonium zirconium lactate, ammonium zirconium citrate, and mixtures thereof. Hexafluorozirconic acid is used most often. An example of a titanium compound is fluorotitanic acid and its salts. An example of a hafnium compound is hafnium nitrate. An example of a yttrium compound is yttrium nitrate. An example of a cerium compound is cerous nitrate.

Typical compositions to be used in the pretreatment step include non-conductive organophosphate and organophosphonate pretreatment compositions such as those disclosed in U. S. Patents 5,294,265 and 5,306,526. Such organophosphate or organophosphonate pretreatments are available commercially from PPG Industries, Inc. under the name NUPAL®.

The substrates for use in the preparation of the multilayer coated substrates of the present invention further comprise an electrodeposited coating (i) deposited upon the surface of the substrate prior to applying the aqueous coating composition of the present invention. Such coated substrates demonstrate an initial Rₐ value of 0.3 to 0.4, such as 0.3 to 0.35. Rₐ represents arithmetical mean surface roughness, and may be measured using a profilometer available from Mitutoyo America Corporation, according to the manufacturer's instructions, with 2.5 cutoff wavelength. The aqueous coating composition of the present invention is then applied directly onto the electrodeposited coating (i) to form a base coating layer (ii).

The multi-layer coated substrates of the present invention further comprises a clear coating layer (iii) applied directly to the base coating layer (ii).

Each coating composition may be applied by known application techniques, such as dipping or immersion, spraying, intermittent spraying, dipping followed by spraying, spraying followed by dipping, brushing, or by roll-coating. Usual spray techniques and equipment for air spraying and electrostatic spraying, either manual or automatic methods, can be used.

In step (A) of the method of the present invention, the coating composition of the present invention is applied onto the cured electrodeposition coating layer of an electro-coated substrate without substantially curing the coating composition to form a substantially uncured base coating layer. It is an advantage of the coating composition according to the present invention, that it can be applied in a dry film thickness of 25 to 40 µm, such as 30 to 35 µm in one coating step.

Optionally the applied base coating layer can be flashed in step (B) for example the base coating layer is exposed to ambient conditions for about 1 to 20 minutes. Flashing can also be conducted at elevated temperatures for example at temperatures of no more than 80°C or less than 70°C for a time that does not substantially effect curing of the base coating layer.

In step (C) of the method of the present invention, a clear coating composition, is then applied to at least a portion of the base coating to form a substantially uncured composite coating thereon. If the clear coating composition is waterborne or solventborne, then it is applied in a wet-on-wet application. The clear coating can be applied to the surface of the base coating by any of the coating processes discussed above for applying the primary composition. The clear coating composition can be waterborne, solventborne or a powder coating composition, as desired, but is usually a solventborne coating composition. Typically the clear coating composition is a crosslinkable coating composition comprising at least one thermosettable film-forming material and at least one crosslinking material, although thermoplastic film-forming materials such as polyolefins can be used. Any of the transparent or clear coating compositions known in the art are suitable for this purpose. Suitable waterborne clear coating compositions are disclosed in U.S. Pat. No. 5,098,947 (incorporated by reference herein) and are based on water soluble acrylic resins. Useful solvent borne clearcoats are disclosed in U.S. Pat. Nos. 5,196,485 and 5,814,410 (incorporated by reference herein) and include polyepoxides and polyacid curing agents. Specific examples include those available under the tradenames DIAMOND COAT® and NCT®, all commercially available from PPG. Crosslinkable coatings comprising at least one polymeric polyol such as an acrylic polyol, and at least one crosslinking agent such as an aminoplast, are also suitable. Suitable powder clearcoats are described in U.S. Pat. No. 5,663,240 (incorporated by reference herein) and include epoxy functional acrylic copolymers and polycarboxylic acid crosslinking agents. The clear coating composition can include crosslinking materials and additional ingredients such as are discussed above but not pigments. Usually the clear coating composition is chemically different or contains different relative amounts of ingredients from the base coating composition, although the clear coating composition can be the same but without the pigments. Other examples include the clear coating compositions described in U.S. Pat. Nos. 4,650,718; 5,814,410; 5,891,981; and WO 98/14379.

The clear coating layer is usually apples in a dry film thickness of 35 to 60 µm, such as 40 to 55 µm or 45 to 50 µm.

After application of the clear coating layer, the coated substrate is subjected to conditions sufficient to substantially cure the composite coating; e. g., a temperature of 80 to 160°C for at least 15 minutes, sufficient to substantially cure each layer of the composite coating simultaneously after all coating layers have been applied to the substrate.

The following examples are provided to further illustrate the present invention and are not intended to limit the scope of the invention as defined in the claims.

### Examples:

### Example 1: Preparation of a polyester:

To a reactor equipped with a stirrer, a water separator and a temperature control device 1732 g Terathane® 650 a polytetramethylen glycol ether having a number average molecular weight of 650 commercially available from DuPont and 307 g trimellitic anhydride were charged and heated to 185°C. When an acid number of 40 mg KOH/ g for the polyester was achieved the reaction temperature was reduced to 175°C and continued until the acid number dropped to 30 mg KOH/ g. After cooling the polymer melt to 85°C 552g of a 10 wt.-% aqueous solution of dimethyl ethanol amine was added followed by 2390 g of deionized water. The final aqueous polymer dispersion had a solids content of 40 wt.-%. The T_{g} of the polyester was -74°C measured according to ASTM D3418-15 (midpoint temperature, at a heating rate of 20°C/min). The acid number was 29 mg KOH/ g.

### Example 2: Preparation of a basecoat composition

A basecoat composition was prepared from the following mixture of ingredients as described below:

**Table 1**

| No. | | Parts by weight |
|---|---|---|
| 1 | Byk-348 ¹ | 0.05 |
| 2 | Urethane diol ² | 3.43 |
| 3 | Daotan VTW 6462/36WA ³ | 23.9 |
| 4 | Carbon black paste ⁴ | 0.15 |
| 5 | Yellow iron oxide paste ⁵ | 0.18 |
| 6 | Red iron oxide paste ⁶ | 0.02 |
| 7 | White paste 1 ⁷ | 42.26 |
| 8 | Aqueous thickener ⁸ | 13.63 |
| 9 | 50% N,N-dimethylethanolamine in demineralized water | 0.09 |
| 10 | Deionized water | 5.38 |
| 11 | Resimene 742 ⁹ | 8.40 |
| 12 | Cymel 327 ¹⁰ | 1.24 |
| 13 | Shellsol D70 ¹¹ | 0.15 |
| 14 | Propylene glycol monomethyl ether | 1.03 |

| | | |
|---|---|---|
| ¹ silicone surfactant available from BYK Chemie GmbH, Germany ² made of 70% polyoxypropylene diamine (JEFFAMINE D 400 available from Huntsman Corp., USA) and 30% of ethylene carbonate at 90% solid by weight in N-butxypropanol. ³ cross-linked urethane-acryl hybrid micro-particles available from Allnex Belgium SA/NV ⁴ carbon black pigment FW 1 (available from Orion Engineered Carbons, Germany) dispersed in a resin blend of 8,6% waterborne acrylic resin (8.5% hydroxyethyl acrylate, 18.0% butyl methacrylate, 30.0% styrene, 35.0% butyl acrylate, 8.5% acrylic acid made at 27.0% solids) and 7,1% acrylic-polyester-urethane latex [3.0% ethylene glycol dimethacrylate, 11.0% methyl methacrylate, 24% butyl acrylate, 2% acrylic acid, and 60% polyester-acrylic-urethane (neopentyl glycol, adipic acid, and hydroxyethyl acrylate-butyl acrylate, 1,6-hexamethylene diisocyanate) made at 43.5% solids]. The dispersion has a 22.8% weight solids content and a pigment to binder ratio of 0,41. ⁵ yellow iron oxide YLO-3288D (available from Huntsman Corp., USA) dispersed in a resin blend of 5,0% waterborne acrylic resin (8.5% hydroxyethyl acrylate, 18.0% butyl methacrylate, 30.0% styrene, 35.0% butyl acrylate, 8.5% acrylic acid made at 27.0% solids) and 4.2% acrylic-polyester-urethane latex [3.0% ethylene glycol dimethacrylate, 11.0% methyl methacrylate, 24% butyl acrylate, 2% acrylic acid, and 60% polyester-acrylic-urethane (neopentyl glycol, adipic acid, and hydroxyethyl acrylate-butyl acrylate, 1,6-hexamethylene diisocyanate) made at 43.5% solids]. The dispersion has a 45.4% weight solids content and a pigment to binder ratio of 3.9. ⁶ red iron oxide (available from Lanxess Corp. as Bayferrox 140) dispersed in a resin blend of 5.7% waterborne acrylic resin (8.5% hydroxyethyl acrylate, 18.0% butyl methacrylate, 30.0% styrene, 35.0% butyl acrylate, 8.5% acrylic acid made at 27.0% solids) and 4.7% acrylic-polyester-urethane latex [3.0% ethylene glycol dimethacrylate, 11.0% methyl methacrylate, 24% butyl acrylate, 2% acrylic acid, and 60% polyester-acrylic-urethane (neopentyl glycol, adipic acid, and hydroxyethyl acrylate-butyl acrylate, 1,6-hexamethylene diisocyanate) made at 43.5% solids]. The dispersion has a 42.4% weight solids content and a pigment to binder ratio of 3.1. ⁷ rutile titanium dioxide (available from Cristal Global as Tiona 595) dispersed in a 9% waterborne polyester resin of Example 1. The dispersion has a 77% weight solids content and a pigment to binder ratio of 7.6. ⁸ 2% dispersion of Laponite RD a synthetic layered silicate available from BYK Chemie GmbH, Germany in water. ⁹ aminoplast crosslinker available from Ineos Group AG, Germany ¹⁰ aminoplast crosslinker available from Cytec Industries, USA ¹¹ aliphatic mineral spirits available from Shell Chemicals, The Netherlands | | |

Materials 1-3 were mixed under stirring. Materials 4-7 were then added under stirring and stirring was continued for 15 minutes before adding Materials 8-10. Meanwhile Materials 11-14 were mixed in a separate container and then added to the mixture of Materials 1-10. After mixing for a further 15 minutes the pH was adjusted to 8.5 using 50% aqueous N,N-dimethylethanolamine. The resulting basecoat was aged for 24 hours prior to viscosity adjustment with demineralized water. The low shear viscosity of the basecoat was measured to be 7 Pas at 0.1 s⁻¹ at 25°C measured according to ASTM 22196-15 Method B Spindle No **X.**

### Example 3: Composite coating:

The basecoats of the coating composition of example 2 and of a commercial white base coat control available as A-B203726-5B8 from PPG Industries, after adjusting the low shear viscosity with deionized water to 17 Pas at 0.1 s⁻¹ at 25°C measured according to ASTM 22196-15 Method B Spindle No LV-1 were spray applied in an environment controlled to 70-75° F. (21-24° C.) and 50-60% relative humidity using a LabPainter machine made by LacTec Gmbh, onto 30.48 cm by 10.16 cm (12 inch by 4 inch) steel panels coated with cured ELECTROCOAT (ED 6060CZ) available from PPG Industries. The basecoats were spray applied to the panels and flashed at ambient temperature for a period of 5 minutes and then baked at 80° C. for a period of 10 minutes. The new high solid basecoat (B2only) allows to spray 30 - 35 µm in just on pass (one coat by bell), versus the comparative sample needs two coats to reach 30 - 35 µm.

A two component polyurethane clearcoat (A-B2030512-4CO) available from PPG Industries, was spray applied onto the basecoat and flashed at ambient temperature for a period of 10 minutes. The entire layering system was baked at 140° C. for a period of 30 minutes. The dry film thickness for the basecoat and clearcoat was 30-35 µm and 45-50 µm, respectively.

The coated panels were tested for stone chip resistance according to VDA: DIN EN ISO 20567-1, metal pellets GH-K 4.0-5.0 mm, mass 2x500gr, test pressure 2 bar. The tested panels were evaluated according to DIN 55996-1 giving ratings from 0.5 to 5 (best to worst).

The panel with the inventive basecoat achieved a stone chip resistance rating of 1.0, whereas the panel with the commercial control achieved a rating of 1.5.

The invention may be described by following aspects:
1. An aqueous coating composition comprising:
   (a) a film-forming resin selected from polyesters made from monomers comprising a polyetherpolyol and a polycarboxylic acid, the polyester bearing functional groups and having a Tg of less than
      -10°C measured according to ASTM D3418-15 (midpoint temperature, at a heating rate of 20°C/min);
   (b) a rheology modifier selected from inorganic and resinous rheology modifiers and combinations thereof;
   (c) one or more color-imparting pigments or effect pigments or combinations thereof; and
   (d) one or more cross-linking agents that are reactive with the functional groups of the film-forming resin according to a),
   wherein the coating composition exhibits a low shear viscosity of 0.5 to 40 Pas at 0.1 s⁻¹ at 25°C measured according to ASTM 22196-15 Method B Spindle No LV-1.
2. The coating composition of aspect 1, wherein the monomers for making the polyester is free of fatty acid dimers.
3. The coating composition of any of the preceding aspects, wherein the polyester has an acid number of 15 - 50 mg KOH/g.
4. The coating composition of any of the preceding aspects, wherein the polyester has a hydroxyl number of 30 - 90 mg KOH/g.
5. The coating composition of any of the preceding aspects, wherein the polyester has a weight average molecular weight of 10,000 - 100,000 measured using gel permeation chromatography using polystyrene standards with tetrahydrofuran as the mobile phase and refractive index as the detection method.
6. The coating composition of any of the preceding aspects, wherein the polyester component is present in the coating composition in an amount of 10 to 30 wt.-% based on total weight of resin solids.
7. The coating composition of any of the preceding aspects, wherein the polyetherpolyol is selected from poly(tetrahydrofuran), poly(ethylene oxide), poly(propylene oxide) and combinations thereof.
8. The coating composition of aspect 7, wherein the polyetherpolyol is a poly(tetrahydrofuran)
9. The coating composition of any of the preceding aspects, wherein the polyester is a branched polyester.
10. The coating composition of any of the preceding aspects, wherein the polycarboxylic acid comprises a compound having at least three carboxylic acid groups or anhydrides thereof.
11. The coating composition of any of the preceding aspects, wherein at least 80 mol percent of the polycarboxylic acid comprises a compound having at least three carboxylic acid groups.
12. The coating composition of any of the preceding aspects, wherein the polycarboxylic acid is selected from trimellitic acid, 1,3-cyclohexanedicarboxylic acid, dodecanedioic acid, sebacic acid, azelaic acid, maleic acid, fumaric acid, succinic acid, adipic acid, citric acid, tartaric acid, 2,6-naphthalenepolycarboxylic acid, glutaric acid, itatonic acid and anhydrides thereof and combinations thereof.
13. The coating composition of any of the preceding aspects, wherein the monomers for the polyester comprise a monomer bearing a combination of hydroxyl groups and carboxylic acid groups and the total number of hydroxyl groups and carboxylic acid groups is at least three.
14. The coating composition of any of the preceding aspects, wherein the crosslinking agent is selected from optionally etherified melamine formaldehyde resins.
15. The coating composition of aspect 14, wherein the cross-linker component (d) comprises as least two different optionally etherified melamine formaldehyde resins.
16. The coating composition of aspect 15, wherein the cross-linker component (d) comprises at least one optionally etherified melamine formaldehyde resin (d1) having a NH content of less than 15 mol percent and at least one optionally etherified melamine formaldehyde resin (d2) having a NH content of least 15 mol percent.
17. The coating composition of aspect 16, wherein the weight ratio of optionally etherified melamine formaldehyde resin (d1) to the optionally etherified melamine formaldehyde resin (d2) 90:10 to 10:90.
18. The coating composition of any of the preceding aspects, wherein the coating composition further comprises film-forming resins (e) different from component (a) bearing functional groups reactive with the cross-linking agent (d).
19. The coating composition of aspect 15, wherein the additional film-forming resins (e) are selected from polyurethane resins, acrylic resins polyesters, polyethers, polycarbonates, hydrocarbon resins, epoxy resins and hybrid resins derived from these resin types.
20. The coating composition of aspect 18 or 19, wherein (e) comprises a polyurethanepolyol.
21. The coating composition of any of aspects 18 - 20, wherein component (e) is free of resins comprising only acrylic repeating units.
22. The coating composition of any of the preceding aspects, wherein the inorganic rheology modifier comprises a sheet silicate.
23. The coating composition of any of the preceding aspects, wherein the coating composition comprises a sheet silicate and a further film-forming resin (e) comprising a polyurethanepolyol.
24. The coating composition of any of aspects 20 - 23, wherein the polyurethanepolyol is a urethane acrylic hybrid.
25. The coating composition of aspect 24, wherein the urethane acrylic hybrid bears keto functionality.
26. The coating composition of any of the preceding aspects, wherein the color-imparting pigments comprise white pigments.
27. The coating composition of any of the preceding aspects, wherein the coating composition contains less than 8 wt.-% organic solvents based on the total weight of the coating composition..
28. The coating composition of any of the preceding aspects, wherein the coating composition has a solids content of at least 30 vol-% based on the total volume of the coating composition.
29. A method for making the coating composition of any of aspects 1-28 comprising:
   mixing component (a) and (c) to provide a pigment paste; and
   combining the remaining components of the coating composition with the pigment paste in any order.
30. The method of aspect 26, wherein the component (a) is the sole resin component in the pigment paste.
31. A method for coating an automotive substrate comprising:
   (A) depositing the coating composition of any of aspects 1-28 onto the cured electrodeposition coating layer of an electro-coated substrate;
   (B) optionally flashing the coating layer obtained in step (A);
   (C) depositing a clear coating composition onto the coating layer obtained in step (A) or step (B) if step (B) is performed;
   (D) simultaneous curing of the coating layers applied in step (A) and (C).
32. A composite multilayer coating comprising
   (i) an electrocoating layer deposited from an electrophoretically applied coating composition;
   (ii) a base coating layer deposited from the coating composition of any of aspects 1-28 directly onto the electrocoating layer; and
   (iii) a clear coating layer deposited directly onto the base coating layer.
33. A coated substrate comprising a cured coating layer deposited from the coating composition according to any of aspects 1-28 or the composite multilayer coating of aspect 32, or that is obtainable by the method of aspect 31.

## Claims

1. An aqueous coating composition comprising:
(a) a film-forming resin selected from polyesters made from monomers comprising a polyetherpolyol and a polycarboxylic acid, the polyester bearing functional groups and having a Tg of less than
-10°C measured according to ASTM D3418-15 (midpoint temperature, at a heating rate of 20°C/min);
(b) a rheology modifier selected from inorganic and resinous rheology modifiers and combinations thereof;
(c) one or more color-imparting pigments or effect pigments or combinations thereof; and
(d) one or more cross-linking agents that are reactive with the functional groups of the film-forming resin according to a),
wherein the coating composition exhibits a low shear viscosity of 0.5 to 40 Pas at 0.1 s⁻¹ at 25°C measured according to ASTM 22196-15 Method B Spindle No LV-1.

2. The coating composition of claim 1, wherein
(a) the monomers for making the polyester is free of fatty acid dimmers; and/or
(b) the polyester has an acid number of 15 - 50 mg KOH/g; and/or
(c) the polyester has a hydroxyl number of 30 - 90 mg KOH/g; and/or
(d) the polyester has a weight average molecular weight of 10,000 - 100,000 measured using gel permeation chromatography using polystyrene standards with tetrahydrofuran as the mobile phase and refractive index as the detection method; and/or
(e) the polyester component is present in the coating composition in an amount of 10 to 30 wt.-% based on total weight of resin solids; and/or
(f) the polyester is a branched polyester.

3. The coating composition of any of the preceding claims, wherein the polyetherpolyol is selected from poly(tetrahydrofuran), poly(ethylene oxide), poly(propylene oxide) and combinations thereof; preferably the polyetherpolyol is a poly(tetrahydrofuran)

4. The coating composition of any of the preceding claims, wherein
(a) the polycarboxylic acid comprises a compound having at least three carboxylic acid groups or anhydrides thereof; and/or
(b) at least 80 mol percent of the polycarboxylic acid comprises a compound having at least three carboxylic acid groups; and/or
(c) the polycarboxylic acid is selected from trimellitic acid, 1,3-cyclohexanedicarboxylic acid, dodecanedioic acid, sebacic acid, azelaic acid, maleic acid, fumaric acid, succinic acid, adipic acid, citric acid, tartaric acid, 2,6-naphthalenepolycarboxylic acid, glutaric acid, itatonic acid and anhydrides thereof and combinations thereof; and/or
(d) the monomers for the polyester comprise a monomer bearing a combination of hydroxyl groups and carboxylic acid groups and the total number of hydroxyl groups and carboxylic acid groups is at least three.

5. The coating composition of any of the preceding claims, wherein the crosslinking agent is selected from optionally etherified melamine formaldehyde resins,
- preferably the cross-linker component (d) comprises as least two different optionally etherified melamine formaldehyde resins,
- preferably the cross-linker component (d) comprises at least one optionally etherified melamine formaldehyde resin (d1) having a NH content of less than 15 mol percent and at least one optionally etherified melamine formaldehyde resin (d2) having a NH content of least 15 mol percent,
- the weight ratio of optionally etherified melamine formaldehyde resin (d1) to the optionally etherified melamine formaldehyde resin (d2) 90:10 to 10:90.

6. The coating composition of any of the preceding claims, wherein the coating composition further comprises
film-forming resins (e) different from component (a) bearing functional groups reactive with the cross-linking agent (d),
- preferably the additional film-forming resins (e) are selected from polyurethane resins, acrylic resins polyesters, polyethers, polycarbonates, hydrocarbon resins, epoxy resins and hybrid resins derived from these resin types;
- preferably (e) comprises a polyurethanepolyol;
- preferably component (e) is free of resins comprising only acrylic repeating units.

7. The coating composition of any of the preceding claims, wherein the inorganic rheology modifier comprises a sheet silicate.

8. The coating composition of any of the preceding claims, wherein the coating composition comprises a sheet silicate and a further film-forming resin (e) comprising a polyurethanepolyol, preferably the polyurethanepolyol is a urethane acrylic hybrid bearing preferably keto functionality.

9. The coating composition of any of the preceding claims, wherein the color-imparting pigments comprise white pigments.

10. The coating composition of any of the preceding claims, wherein
(a) the coating composition contains less than 8 wt.-% organic solvents based on the total weight of the coating composition; and/or
(b) the coating composition has a solids content of at least 30 vol-% based on the total volume of the coating composition.

11. A method for making the coating composition of any of claims 1-10 comprising:
mixing component (a) and (c) to provide a pigment paste; and
combining the remaining components of the coating composition with the pigment paste in any order.

12. The method of claim 11, wherein the component (a) is the sole resin component in the pigment paste.

13. A method for coating an automotive substrate comprising:
(A) depositing the coating composition of any of claims 1-10 onto the cured electrodeposition coating layer of an electro-coated substrate;
(B) optionally flashing the coating layer obtained in step (A);
(C) depositing a clear coating composition onto the coating layer obtained in step (A) or step (B) if step (B) is performed;
(D) simultaneous curing of the coating layers applied in step (A) and (C).

14. A composite multilayer coating comprising
(i) an electrocoating layer deposited from an electrophoretically applied coating composition;
(ii) a base coating layer deposited from the coating composition of any of claims 1-10 directly onto the electrocoating layer; and
(iii) a clear coating layer deposited directly onto the base coating layer.

15. A coated substrate comprising a cured coating layer deposited from the coating composition according to any of claims 1-10 or the composite multilayer coating of claim 14, or that is obtainable by the method of claim 13.
